# EUROPEAN PATENT APPLICATION

(11) **EP 4 095 992 A1**
(43) Date of publication of application: **30.11.2022**
(21) Application number: 20919097.4
(22) Date of filing: 11.11.2020
(51) Int. Cl.: H01M 50/153, H01M 50/184

(54) **BUTTON BATTERY, BATTERY SEALING STRUCTURE, AND PRE-ASSEMBLY UNIT**

(30) Priority: 10.02.2020 CN 202010083979
(71) Applicant: Shenzhen Hynetech Company Limited, Shenzhen, Guangdong 518000 (CN)
(72) Inventor: WANG, Xiaoxia, Shenzhen, Guangdong 518000 (CN)
(74) Representative: Appleyard Lees IP LLP
(86) International application number: PCT/CN2020/128204
(87) International publication number: WO 2021/159791

(57) **Abstract**

A button battery, a battery sealing structure, and a pre-assembly unit. The pre-assembly unit comprises a casing (100), a sealing ring (200), and a battery cover (300). The casing (100) is provided with an accommodating cavity (110). The casing (100) comprises an annular receiving member (120), and a limiting member (130) protrudingly arranged on the receiving member (120), the receiving member (120) is sleeved on an outer side of the accommodating cavity (110), and arranged at a port of the accommodating cavity (110), and the limiting member (130) is in the shape of a ring and is arranged on an outer side of the accommodating cavity (110). The sealing ring (200) comprises a first annular member (210) arranged above the receiving member (120), and the battery cover (300) is arranged above the first annular member (210). The limiting member (130) is provided with a bendable portion (132) arranged above the battery cover (300). The button battery, the battery sealing structure, and the pre-assembly unit can optimize the sealing structure of the battery, reduce manufacturing costs, and help improve the space utilization rate of the casing (100).

## Description

### TECHNICAL FIELD

The present application relates to the technical field of batteries, in particular to a button battery, a battery sealing structure, and a pre-assembly unit.

### BACKGROUND

At present, as a mobile power source, batteries are widely used in various occasions and become an indispensable item in people's lives.

A conventional sealing structure of a button battery includes a battery cover, a sealing ring, and a battery housing. The sealing method is as follows: 1, the sealing ring is sleeved on an outer wall of an opening of the battery housing; and 2, the battery cover covers an outer wall of the sealing ring, and the battery cover is sealed by special equipment.

The conventional sealing structure of the button battery is not reasonable enough, which makes it difficult to reduce the manufacturing cost.

### SUMMARY

Based on this, it is necessary to provide a button battery, a battery sealing structure, and a pre-assembly unit, which can optimize the battery sealing structure, reduce the manufacturing cost, and improve the space utilization rate of the housing.

The technical solutions are as follows.

According to an aspect of the application, a pre-assembly unit includes a housing, a sealing ring, and a battery cover. The housing is provided with an accommodating cavity. The housing includes an annular receiving body and a limiting body protruding from the receiving body. The receiving body is sleeved on an outer side of the accommodating cavity and is provided at an opening of the accommodating cavity. The limiting body is in a ring shape and is disposed on the outer side the accommodating cavity. The sealing ring includes a first annular body disposed above the receiving body. The battery cover is disposed above the first annular body. The limiting body is provided with a bendable portion disposed above the battery cover.

When the above-mentioned pre-assembly unit is used, the receiving body and the limiting body are formed at the opening of the housing, and then the shaped sealing ring is placed on the receiving body, or the sealant is applied on the receiving body to form the sealing ring. Then, the battery cover is disposed on the sealing ring. At this case, the battery cover can be pressed and fixed on the receiving body by simply bending the bendable portion on the limiting body, and the sealing ring is used to enable the battery cover to seal the accommodating cavity, so as to seal and store the battery material in the accommodating cavity. In addition, the sealing structure of the housing is provided at the opening of the accommodating cavity, and the battery material can be directly placed into the accommodating cavity. When sealing, it is only necessary to bend the bendable portion to achieve the sealing. The related processes are simplified. Compared with the prior art, the sealing ring can be sealed with the battery cover without most part of the sealing ring extending into the accommodating cavity and being fit to the side wall of the accommodating cavity, which is conducive to making full use of the accommodating cavity to store battery materials, so that under the same conditions, the pre-assembly unit can be pre-loaded with more battery materials, which is beneficial to improve the performance of the battery.

The technical solutions are further described below.

In one of the embodiments, a first arc-shaped transiting portion is provided between the receiving body and the opening of the accommodating cavity, the first annular body is provided with a first mating surface matching with the first arc-shaped transiting portion.

In one of the embodiments, the first annular body is provided with a first compensating protrusion, and the first compensating protrusion is disposed toward the battery cover and adjacent to the limiting body, or the battery cover is provided with a first protrusion disposed toward the first annular body and adjacent to the limiting body.

In one of the embodiments, the sealing ring further includes a second annular body matched with the limiting body, the second annular body is fixedly connected to the first annular body to form an "L" shape, and the second annular body is partially extended above the battery cover.

In one of the embodiments, the battery cover abuts against the second annular body.

In one of the embodiments, a second arc-shaped transiting portion is provided between the receiving body and the limiting body, a second mating surface matched with the second arc-shaped transiting portion is provided between the first annular body and the second annular body, and the second annular body is fitted with the limiting body.

In one of the embodiments, the second annular body is provided with a second compensating protrusion, and the second compensating protrusion is disposed above the battery cover and adjacent to the battery cover, or a second protrusion is provided on an outer side of the battery cover, and the second protrusion is disposed adjacent to the second annular body.

According to another aspect of the present application, a battery sealing structure is provided. The battery sealing structure includes the pre-assembly unit in any of the above embodiments, and the bendable portion is bent to form an abutting portion configured to press the battery cover.

The above-mentioned pre-assembly unit is employed to the battery sealing structure, and then the receiving body and the limiting body can be formed at the opening of the housing, and then the shaped sealing ring is placed on the receiving body, or sealant is applied on the receiving body to form the sealing ring. Then, the battery cover is disposed on the sealing ring. At this case, the battery cover can be pressed and fixed on the receiving body by simply bending the bendable portion on the limiting body to form the abutting portion, and the sealing ring is used to enable the battery cover to seal the accommodating cavity, so that the battery material is sealed and stored in the accommodating cavity. In addition, the sealing structure of the housing is provided at the opening of the accommodating cavity, the battery material can be directly placed into the accommodating cavity, and when sealing, it is only necessary to bend the bendable portion to achieve the sealing. The related processes are simplified. Moreover, compared with the prior art, there is no need that most part of the sealing ring extends into the accommodating cavity to be fit to the side wall of the accommodating cavity to occupy the space of the accommodating cavity. It is conducive to making full use of the accommodating cavity to store battery materials, so that under the same conditions, the battery sealing structure can seal more battery materials, which is beneficial to improve the performance of the battery.

The technical solutions are further described below.

In one of the embodiments, the sealing ring further includes a second annular body matched with the limiting body, the second annular body is fixedly connected to the first annular body to form an "L" shape, and the second annular body is partially extended above the battery cover, the abutting portion abuts against the second annular body.

According to another aspect of the present application, a button battery is provided. The button battery includes the above-mentioned battery sealing structure.

The button battery adopts the above-mentioned battery sealing structure, which is beneficial to reduce the manufacturing cost and improve the space utilization rate of the housing.

### BRIEF DESCRIPTION OF THE DRAWINGS

FIG. 1 is a schematic diagram of a pre-assembly unit in an embodiment.
FIG. 2 is an enlarged view of the circled portion A of FIG. 1.
FIG. 3 is a partial enlarged view of a sealing ring shown in FIG. 2.
FIG. 4 is a schematic diagram of the sealing ring cooperating with a battery cover shown in FIG. 1.
FIG. 5 is a schematic diagram of a battery sealing structure formed by the pre-assembly unit shown in FIG. 1.
FIG. 6 is an enlarged view of the circled portion B of FIG. 5.

### Description of reference numbers:

100, housing; 110, accommodating cavity; 120, receiving body; 130, limiting body; 132, bendable portion; 134, abutting portion; 140, first arc-shaped transiting portion; 150, second arc-shaped transiting portion; 200, sealing ring; 210, first annular body; 212, first mating surface; 214, first compensating protrusion; 220, second annular body; 230, second mating surface; 300, battery cover.

### DETAILED DESCRIPTION OF THE EMBODIMENTS

The present application will now be described in detail with reference to the accompanying drawings and embodiments in order to make the objects, technical solutions, and advantages of the present application more clear. It should be understood that the specific embodiments described herein are only for explaining the present application, and not intended to limit the present application.

It should be noted that when an element is referred to as being "fixed on", "disposed on", "fixed on" or "mounted on" another element, it can be directly on the other element or an intervening element may also be present. When an element is referred to as being "connected" to another element, it can be directly connected to the other element or intervening elements may also be present. Further, when one element is considered to be "fixedly connected" to another element, the two can be fixed by detachable connection, or can be fixed by non-detachable connection, such as socket connection, snap connection, integral molding fixing, welding, etc., which can be implemented in the prior art, and is not redundant here. When an element and another element are perpendicular or approximately perpendicular to each other, it means that the ideal state of the two is vertical, but due to the influence of manufacturing and assembly, there may be a certain vertical error. The terms "vertical", "horizontal", "left", "right" and similar expressions used herein are for the purpose of illustration only and do not represent the only embodiment.

Unless otherwise defined, all technical and scientific terms used herein have the same meaning as commonly understood by one of ordinary skill in the art to which this application belongs. The terms used herein in the description of the present application are for the purpose of describing specific embodiments only, and are not intended to limit the present application. As used herein, the term "and/or" includes any and all combinations of one or more of the associated listed items.

The "first" and "second" involved in the present application do not represent a specific quantity and order, but are only used for the distinction of names.

During the manufacturing process of button batteries, related parts and materials are generally pre-loaded, and finally packaged into a whole. Since the conventional sealing structure of the button battery is defective and unreasonable, improvements are needed.

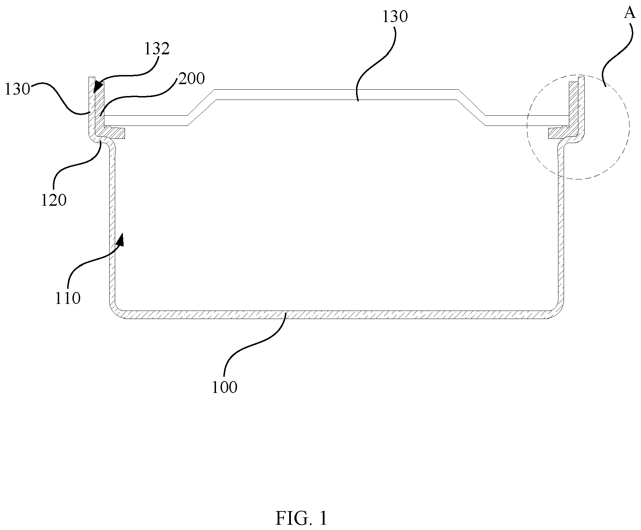

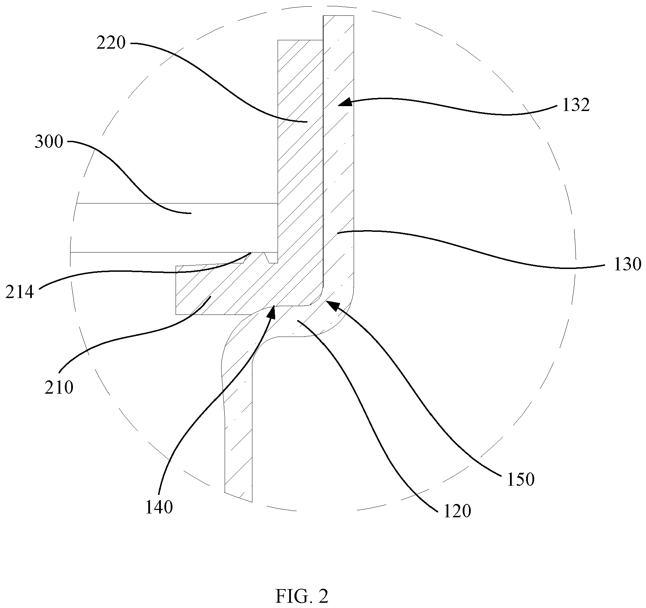

Referring to FIG. 1 and FIG. 2, in an embodiment, a pre-assembly unit configured to manufacture a battery sealing structure is provided. The pre-assembly unit includes a housing 100, a sealing ring 200, and a battery cover 300. The housing 100 is provided with an accommodating cavity 110. The housing 100 includes an annular receiving body 120 and a limiting body 130 protruding from the receiving body 120. The receiving body 120 is sleeved on an outer side of the accommodating cavity 110 and is provided at an opening of the accommodating cavity 110. The limiting body 130 is in a ring shape and is provided on the outer side of the accommodating cavity 110. The sealing ring 200 includes a first annular body 210 disposed above the receiving body 120. The battery cover 300 is disposed above the first annular body 210. The limiting body 130 is provided with a bendable portion disposed above the battery cover 300.

When the above-mentioned pre-assembly unit is used, the receiving body 120 and the limiting body 130 are formed at the opening of the housing 100, and then the shaped sealing ring 200 is placed on the receiving body 120, or the sealant is applied on the receiving body 120 to form the sealing ring 200. Then, the battery cover 300 is disposed on the sealing ring 200. At this case, the battery cover 300 can be pressed and fixed on the receiving body 120 by simply bending the bendable portion on the limiting body 130, and the sealing ring 200 is used to enable the battery cover 300 to seal the accommodating cavity 110, so as to seal and store the battery material in the accommodating cavity 110. In addition, the sealing structure of the housing 100 is provided at the opening of the accommodating cavity 110, and the battery material can be directly placed into the accommodating cavity 110. When sealing, it is only necessary to bend the bendable portion to achieve the sealing. The related processes are simplified. Compared with the prior art, the sealing ring 200 can be sealed with the battery cover 300 without most part of the sealing ring 200 extending into the accommodating cavity 110 and being fit to the side wall of the accommodating cavity 110, which is conducive to making full use of the accommodating cavity 110 to store battery materials, so that under the same conditions, the pre-assembly unit can be pre-loaded with more battery materials, which is beneficial to improve the performance of the battery.

It should be noted that the "bendable portion" is a part of the limiting body 130 and is disposed above the battery cover 300, and the structure can be bent to form an abutting portion 134 (i.e., a seal) in the battery sealing structure.

The specific structure of the "bendable portion" can be configured as required. Specifically, in this embodiment, the cross-section of the bendable portion is rectangular.

The sealing ring 200 can be injection-molded, or can be formed by curing with sealant.

The battery cover 300 can have various specific shapes, and is not limited here, as long as the requirements of the present application are met.

Specifically, in this embodiment, the structure of the battery cover 300 is shown in FIG. 1.

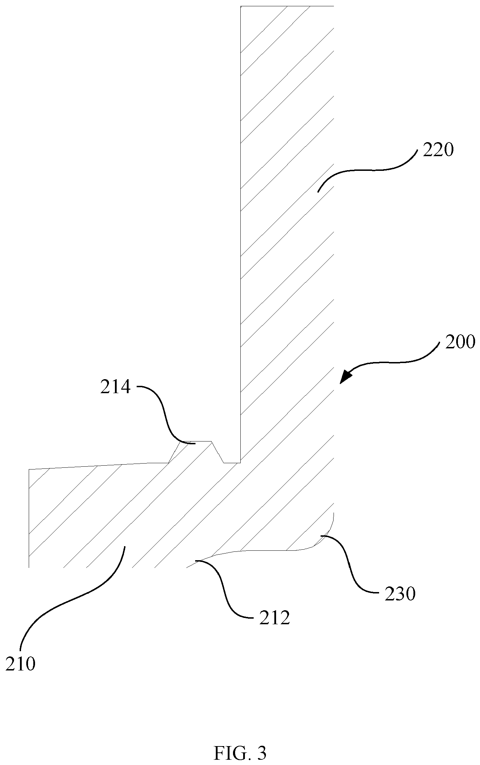

On the basis of any of the above embodiments, as shown in FIG. 2 and FIG. 3, in an embodiment, a first arc-shaped transiting portion 140 is provided between the receiving body 120 and the opening of the accommodating cavity 110. The first annular body 210 is provided with a first mating surface 212 matching with the first arc-shaped transiting portion 140. In this way, the contact area between the receiving body 120 and the sealing ring 200 can be extended through the cooperation between the first arc-shaped transiting portion 140 and the first mating surface 212. After pressing, the sealing effect between the receiving body 120 and the sealing ring 200 is better. Due to the tight fit between the receiving body 120 and the sealing ring 200 without a gap, the battery cover 300 and the sealing ring 200 are also better fitted, making it difficult for the battery material to flow out between the receiving body and the sealing ring 200 or between the battery cover and the sealing ring 200.

On the basis of any of the above embodiments, as shown in FIG. 2 and FIG. 3, in an embodiment, the first annular body 210 is provided with a first compensating protrusion 214. The first compensating protrusion 214 is disposed toward the battery cover 300 and adjacent to the limiting body 130. Or, the battery cover 300 is provided with a first protrusion (not shown) disposed toward the first annular body 210 and adjacent to the limiting body 130. In this way, the first compensating protrusion 214 can be used to compensate the material loss of the sealing ring 200 due to the deformation of the sealing ring 200 during the pressing process of the bendable portion 132, so that the sealing material is fully filled between the receiving body 120 and the battery cover 300, which is beneficial to further improve the sealing reliability between the housing 100 and the battery cover 300. Or the first protrusion is inserted in the gap caused by the material loss in the sealing ring 200 due to the deformation of the sealing ring 200 during the pressing process of the bendable portion 132, so that the sealing material is fully filled between the receiving body 120 and the battery cover 300, which is beneficial to further improve the sealing reliability between the housing 100 and the battery cover 300.

On the basis of any of the above embodiments, as shown in FIG. 1 to FIG. 3, in an embodiment, the sealing ring 200 further includes a second annular body 220 matched with the limiting body 130. The second annular body 220 is fixedly connected to the first annular body 210 to form an "L" shape. The second annular body 220 is partially extended above the battery cover 300. In this way, the battery cover 300 is wrapped by the first annular body 210 and the second annular body 220, the receiving body and the battery cover 300 are used to form a first seal, and then the bendable portion and the battery cover 300 are used to form a second seal, thereby further improving the sealing reliability between the housing 100 and the battery cover 300. Compared with the prior art, this manner can greatly improve the sealing performance of the button battery, so that the reliability of the button battery is higher.

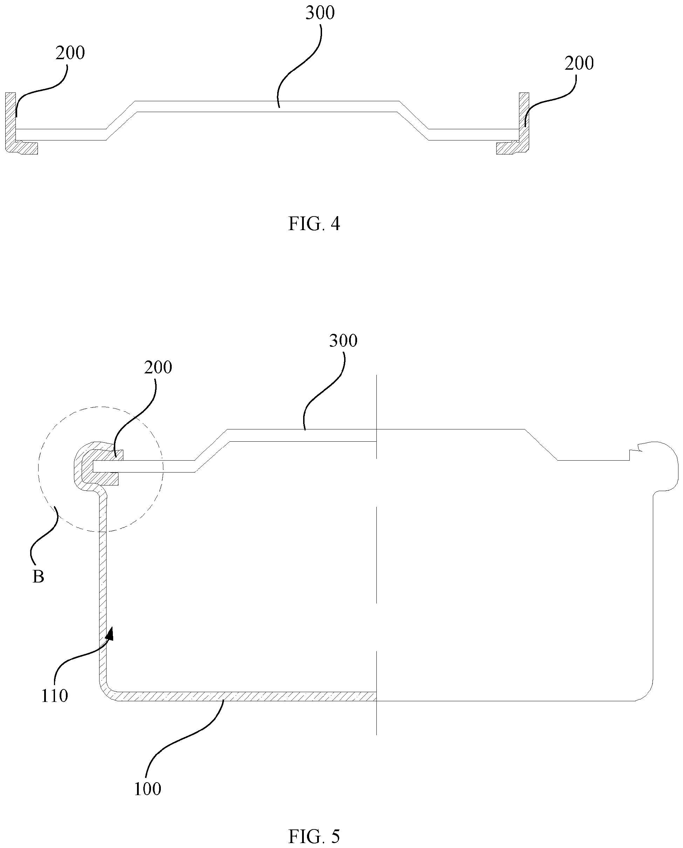

Further, as shown in FIG. 1 and FIG. 4, in an embodiment, the battery cover 300 abuts against the second annular body 220. In this way, a side surface of the battery cover 300 and the limiting body 130 are further used to form a third seal, thereby further improving the sealing effect between the housing 100 and the battery cover 300. The battery cover 300 is wrapped by the sealing ring 200 and pressed by the receiving body 120 and the limiting body 130 of the housing 100, so that a tight seal is formed between the housing 100 and the battery cover.

On the basis of any of the above-mentioned embodiments of the sealing ring 200, as shown in FIGS. 2 and 3, in an embodiment, a second arc-shaped transiting portion 150 is provided between the receiving body 120 and the limiting body 130. A second mating surface 230 matched with the second arc-shaped transiting portion 150 is provided between the first annular body 210 and the second annular body 220. The second annular body 220 is fitted with the limiting body 130. In this way, through the cooperation between the second arc-shaped transiting portion 150 and the second mating surface 230, the housing 100 and the sealing ring 200 are closely matched, so as to form a more reliable sealing structure in the process of forming the seal.

On the basis of any of the above embodiments of the sealing ring 200, in an embodiment, the second annular body 220 is provided with a second compensating protrusion (not shown). The second compensating protrusion is disposed above the battery cover 300 and adjacent to the battery cover 300. Or a second protrusion (not shown) is provided on an outer side of the battery cover 300, and the second protrusion is disposed adjacent to the second annular body 220. Similarly, the second compensating protrusion can be used to compensate the material loss of the second annular body 220 due to the deformation of the second annular body 220 during the pressing process of the bendable portion 132, so that the sealing material is fully filled between the limiting body 130 and the battery cover 300, which is beneficial to further improve the sealing reliability between the housing 100 and the battery cover 300. Or the second protrusion is inserted in the gap caused by the material loss in the second annular body 220 due to the deformation of the second annular body 220 during the pressing process of the bendable portion 132, so that the sealing material is fully filled between the limiting body 130 and the battery cover 300, which is beneficial to further improve the sealing reliability between the housing 100 and the battery cover 300.

Referring to FIGS. 1, 2, 5, and 6, in an embodiment, a battery sealing structure is also provided. The battery sealing structure includes the pre-assembly unit in any of the above embodiments, and the bendable portion is bent to form the abutting portion 134 configured to press the battery cover 300.

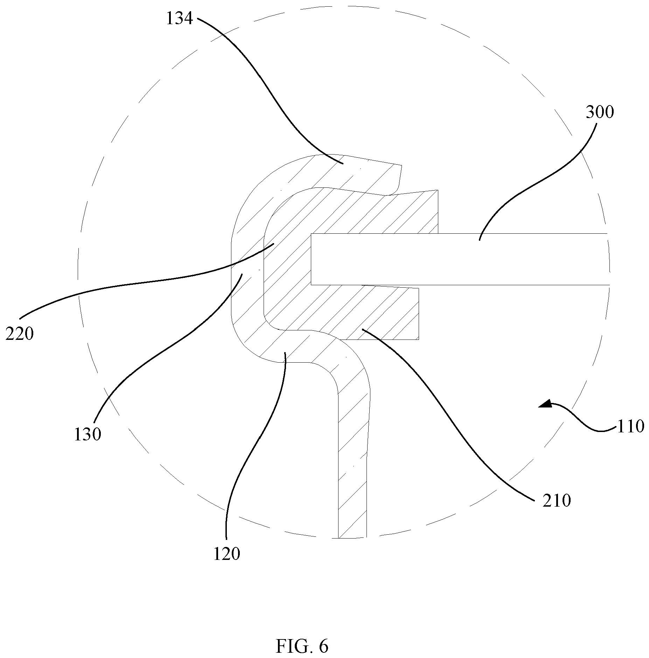

The above-mentioned pre-assembly unit is employed to the battery sealing structure, and then the receiving body 120 and the limiting body 130 can be formed at the opening of the housing 100, and then the shaped sealing ring 200 is placed on the receiving body 120, or sealant is applied on the receiving body 120 to form the sealing ring 200. Then, the battery cover 300 is disposed on the sealing ring 200. At this case, the battery cover 300 can be pressed and fixed on the receiving body 120 by simply bending the bendable portion on the limiting body 130 to form the abutting portion 134 (as shown in FIG. 2 and FIG. 6), and the sealing ring 200 is used to enable the battery cover 300 to seal the accommodating cavity 110, so that the battery material is sealed and stored in the accommodating cavity 110. In addition, the sealing structure of the housing 100 is provided at the opening of the accommodating cavity 110, the battery material can be directly placed into the accommodating cavity 110, and when sealing, it is only necessary to bend the bendable portion to achieve the sealing. The related processes are simplified. Moreover, compared with the prior art, there is no need that most part of the sealing ring 200 extends into the accommodating cavity 110 to be fit to the side wall of the accommodating cavity 110 to occupy the space of the accommodating cavity 110. It is conducive to making full use of the accommodating cavity 110 to store battery materials, so that under the same conditions, the battery sealing structure can seal more battery materials, which is beneficial to improve the performance of the battery.

It should be understood that the receiving body 120 is provided on the outer side of the accommodating cavity 110 to facilitate the pressing action of clamping. A reliable clamping structure is formed between the abutting portion 134 and the receiving body 120, so that the seal between the housing 100 and the battery cover 300 is more reliable. In addition, compared with the conventional technology, the clamping and pressing are easy to implement, which is beneficial to reduce the manufacturing cost.

On the basis of the above embodiments, as shown in FIG. 2, FIG. 3, and FIG. 6, in an embodiment, the sealing ring 200 further includes a second annular body 220 matched with the limiting body 130. The second annular body 220 is fixedly connected to the first annular body 210 to form an "L" shape. The second annular body 220 is partially extended above the battery cover 300. The abutting portion 134 abuts against the second annular body 220. In this way, the battery cover 300 is wrapped by the first annular body 210 and the second annular body 220, the receiving body and the battery cover 300 are used to form a first seal, and then the abutting portion 134 and the battery cover 300 are used to form a second seal, thereby further improving the sealing reliability between the housing 100 and the battery cover 300. Compared with the prior art, this manner can greatly improve the sealing performance of the button battery, so that the reliability of the button battery is higher.

According to another aspect, the present application further provides a button battery, including the above-mentioned battery sealing structure.

The button battery adopts the above-mentioned battery sealing structure, which is beneficial to reduce the manufacturing cost and improve the space utilization rate of the housing 100.

The technical features of the above embodiments can be combined arbitrarily. For the sake of brevity, all possible combinations of the technical features in the above embodiments are not described. However, as long as there is no contradiction in the combination of these technical features, it should be considered as the scope of this description.

The foregoing descriptions are merely specific embodiments of the present application, but are not intended to limit the protection scope of the present application. It should be pointed out that any variation or replacement readily figured out by a person skilled in the art within the technical scope disclosed in the present application shall all fall within the protection scope of the present application. Therefore, the protection scope of the present application shall be subject to the protection scope of the appended claims.

## Claims

1. A pre-assembly unit comprising:
a housing provided with an accommodating cavity, wherein the housing comprises an annular receiving body and a limiting body protruding from the receiving body, the receiving body is sleeved on an outer side of the accommodating cavity and is provided at an opening of the accommodating cavity, the limiting body is in a ring shape and is disposed on the outer side the accommodating cavity;
a sealing ring comprising a first annular body disposed above the receiving body; and
a battery cover disposed above the first annular body;
wherein the limiting body is provided with a bendable portion disposed above the battery cover.

2. The pre-assembly unit according to claim 1, wherein a first arc-shaped transiting portion is provided between the receiving body and the opening of the accommodating cavity, the first annular body is provided with a first mating surface matching with the first arc-shaped transiting portion.

3. The pre-assembly unit according to claim 1, wherein the first annular body is provided with a first compensating protrusion, and the first compensating protrusion is disposed toward the battery cover and adjacent to the limiting body; or
the battery cover is provided with a first protrusion disposed toward the first annular body and adjacent to the limiting body.

4. The pre-assembly unit according to any one of claims 1 to 3, wherein the sealing ring further comprises a second annular body matched with the limiting body, the second annular body is fixedly connected to the first annular body to form an "L" shape, and the second annular body is partially extended above the battery cover.

5. The pre-assembly unit according to claim 4, wherein the battery cover abuts against the second annular body.

6. The pre-assembly unit according to claim 4, wherein a second arc-shaped transiting portion is provided between the receiving body and the limiting body, a second mating surface matched with the second arc-shaped transiting portion is provided between the first annular body and the second annular body, and the second annular body is fitted with the limiting body.

7. The pre-assembly unit according to claim 4, wherein the second annular body is provided with a second compensating protrusion, and the second compensating protrusion is disposed above the battery cover and adjacent to the battery cover; or
a second protrusion is provided on an outer side of the battery cover, and the second protrusion is disposed adjacent to the second annular body.

8. A battery sealing structure comprising the pre-assembly unit according to any one of claims 1 to 7, wherein the bendable portion is bent to form an abutting portion configured to press the battery cover.

9. The battery sealing structure according to claim 8, wherein the sealing ring further comprises a second annular body matched with the limiting body, the second annular body is fixedly connected to the first annular body to form an "L" shape, and the second annular body is partially extended above the battery cover; the abutting portion abuts against the second annular body.

10. A button battery comprising the battery sealing structure according to claim 8 or claim 9.
